# EUROPEAN PATENT APPLICATION

(11) **EP 3 546 170 A1**
(43) Date of publication of application: **02.10.2019**
(21) Application number: 18164455.0
(22) Date of filing: 28.03.2018
(51) Int. Cl.: B29C 45/00, B65D 47/08, B65D 50/04, B65D 47/18

(54) **A METHOD OF FORMING A FLIP-TOP CAP AND A FLIP-TOP CAP**

(71) Applicant: 3M Innovative Properties Company, Saint Paul, MN 55133-3427 (US)
(72) Inventor: Boehm, Andreas, 86934 Reichling (DE); Peuker, Marc, 86938 Schondorf (DE); Knee, Michael, 82380 Peissenberg (DE)
(74) Representative: Hohmann, Arno

(57) **Abstract**

A method of monolithically forming a flip-top cap from a thermoplastic material and a flip-top cap for dispensing a flowable dental substance. The flip-top cap has a base from which a dropper nose (8) protrudes and a closure. The base (4) and the closure (5) are hingedly connected to each other by a living hinge (7) for pivoting between a closed position, in which the closure (5) closes the dropper nose (8), and an open position, in which the dropper nose (8) is uncovered from the closure (5). The method has the steps of injection molding the flip-top cap in the open position in an injection molding device and positioning the closure and the base toward the closed position while the flip-top cap is still the injection molding device. Further is provided a flip-top cap comprising a base from which a dropper nose (8) protrudes and a closure (5), the base and the closure being hingedly connected to each other by a living hinge (7), said living hinge has a pivot section that forms a pivot about a pivot axis, and a pair of tension spring sections directly connected to the pivot section on opposite ends of the pivot section, a length dimension being defined along a path of the living hinge between the base and the closure, a width dimension being defined along the pivot axis and a thickness (being defined in a dimension perpendicular to the width dimension and perpendicular to the length dimension,wherein the smallest thickness of the pivot section (7a) is greater than the smallest thickness of each of the tension spring sections (7b).

## Description

### Field of the Invention

The invention relates to a method of monolithically forming a flip-top cap from a thermoplastic material and a to a flip-top cap for dispensing a flowable dental substance. In particular the invention relates to a flip-top cap that can be bistably positioned between an open and a closed position, wherein the flip-top cap is injection molded in the open position and positioned into the closed position immediately after injection molding.

### Background Art

Dental materials are often provided in packages that are designed to facilitate preparation and/or application of the materials in a dentist's practice. Flowable dental materials are often provided in dropper bottles which allow the material to be dispensed in droplets so that a desired amount can be easily metered by a user.

For example WO 2011/056814 A1 discloses a dispenser that has a body with an outlet, and a flip-top cap for the outlet. The flip-top cap and the body are pivotally movable relative to each other between an open position in which the outlet is open and a closed position in which the flip-top cap closes the outlet. The flip-top cap and the body are adapted for locking engagement with each other in the closed position. The flip-top cap has a locking member for locking and unlocking the flip-top cap and the body in the closed position. A force applied on the locking member for unlocking urges the flip-top cap toward the open position.

Although existing dropper bottles are used and useful in dentistry there is still a need for a dispenser that is reliable in and easy to use and which is relatively inexpensive.

### Summary of the Invention

The invention relates to a method of monolithically forming a flip-top cap from a thermoplastic material, and to a flip-top cap for dispensing a flowable dental substance.

The flip-top cap is monolithically formed of the thermoplastic material. The flip-top cap comprises a base from which a dropper nose protrudes. The flip-top cap further comprises a closure. The base and the closure are hingedly connected to each other by a living hinge for pivoting between a closed position, in which the closure closes the dropper nose, and an open position, in which the dropper nose is uncovered from the closure.

The living hinge has a pivot section that forms a pivot about a pivot axis, and a pair of tension spring sections directly connected to the pivot section on opposite ends of the pivot section. Therefore the living hinge comprises three sections, the pivot section and two tension spring sections. A length dimension is defined along a path of the living hinge between the base and the closure. A width dimension is defined along the pivot axis. And a thickness is defined in a dimension perpendicular to the width dimension and perpendicular to the length dimension. It is noted that the pivot section is flat in the open position and bent by 180 degrees in the closed position of the flip-top cap. The length dimension may be measured in the open position of the flip-top cap in which the pivot section is flat. The smallest thickness of the pivot section is greater than the smallest thickness of each of the tension spring sections.

The method comprises the steps of injection molding the flip-top cap in the open position in an injection molding device; and (while the flip-top cap is still in the device) positioning the closure and the base toward the closed position prior to ejecting the flip-top cap from the injection molding device. The injection molding device is preferably an injection molding machine having an extruder for heating and extruding the thermoplastic material into an injection mold. Accordingly, the closure and the base are preferably positioned toward the closed position before the flip-top cap leaves the injection molding device for the first time after the flip-top cap was molded.

The flip-top cap is preferably molded in the open position in an injection mold. The method may thus comprise the step of molding the flip-top cap in the injection mold. The method further preferably comprises the steps of opening the injection mold, positioning a picker device relative to the flip-top cap, grasping the flip-top cap by the picker device and positioning the closure and the base toward the closed position by the picker device. The method preferably further comprises the step of releasing the flip-top cap (after positioning in the closed position) from the picker device.

The invention is advantageous in that it provides for a flip-top cap having a bistable living hinge that allows relatively precise positioning of the closure to either the open position or the closed position. For example the closure may be positioned to a relatively precise open position so that the closure is clearly positioned away from the dropper nose. Thus the flip-top cap in the open position can be positioned for dispensing the flowable dental substance without interference of the closure. Further, the invention is advantageous in that the closure in the open position is relatively stable, in particular not wobbly. Furthermore, the invention provides for a flip-top cap which can be made from a single material. A so formed cap is relatively inexpensive.

In one embodiment the step of positioning the closure and the base into the closed position is performed at a stage at which the thermoplastic material has solidified after injection molding of the flip-top cap but has not yet cooled down to room temperature of 23 °C (degrees Celsius). Preferably the temperature of the thermoplastic material during performing the step of positioning the closure and the base into the closed position is above 70 °C, preferably within a range of 70 °C to 105 °C. The thermoplastic material is preferably a polypropylene.

In one embodiment the step of positioning the closure and the base into the closed position is performed within a time period of less than or equal to 10 seconds after injection molding the flip-top cap in the open position. In one embodiment the step of positioning the closure and the base into the closed position is performed within a time period of 10 seconds after injection molding the flip-top cap in the open position. The step of positioning the closure and the base into the closed position may be particularly performed at a time of about 5 seconds after injection molding the flip-top cap in the open position. The time is measured starting with the beginning of the opening of the injection mold until the closure and the base are positioned in the closed position.

In an embodiment the tension spring sections protrude from the pivot section and form opposite free ends of the living hinge. The opposite free ends are located along the width dimension. Further, in the length dimension the tension spring sections connect the base and the closure. Accordingly the pivot section and the tension spring sections in combination form one contiguous living hinge. In particular, the living hinge does not have any through-hole. Further the free ends (formed by the tension spring sections) extend at a distance radially offset relative to the pivot axis. This means that the tension spring sections extend preferably inclined with respect to the pivot axis. In particular, the end of each tension spring section that connects to the pivot section is preferably located on or adjacent the pivot section and the free end of each tension spring section is located laterally offset from the pivot axis. Each tension spring section may therefore extend like a skirt around the pivot axis in the closed position of the flip-top cap.

In one embodiment the living hinge and the pivot section each have a width in the width dimension. The width of the pivot section is greater than one half of the width of the living hinge. The width of the pivot section may be about 0.6 of the width of the living hinge. This provides for a relatively stable hinge function and particularly helps avoiding that the hinge connection between the closure and the base is wobbly.

In one embodiment the base and the closure between the open position and the closed position are movable by 180 degrees relative to each other. In particular the living hinge is preferably configured that the base and the closure are movable by 180 degrees relative to each other between the open position and the closed position. The living hinge preferably provides for a bistable positioning of the base and the closure relative to each other toward either the open position or the closed position. This means that the living hinge urges the base and the closure toward either the open or the closed position if positioned in an intermediate position between the open and the closed position.

In one embodiment the flip-top cap is connected with a container bottle. The container bottle may contain the flowable dental substance. The container bottle preferably has an outer thread and the base may have an inner thread. Thus the container bottle and the flip-top cap may be screw-connected with each other.

### Brief Description of the Figures

- Fig. 1: is a perspective view of a dispenser having a flip-top cap according to an embodiment of the invention in a closed position;
- Fig. 2: is a perspective view of the dispenser of Fig. 1 in an open position; and
- Fig. 3: is a cross-sectional view of the dispenser shown in Fig. 1 and 2.

### Detailed Description of the Invention

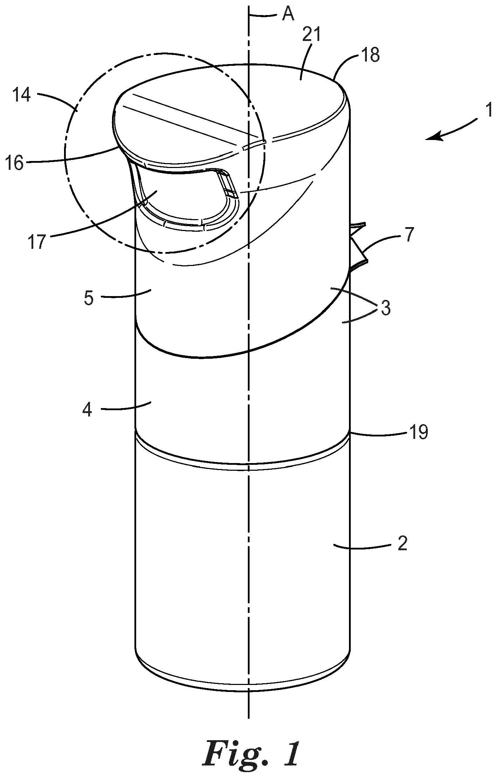

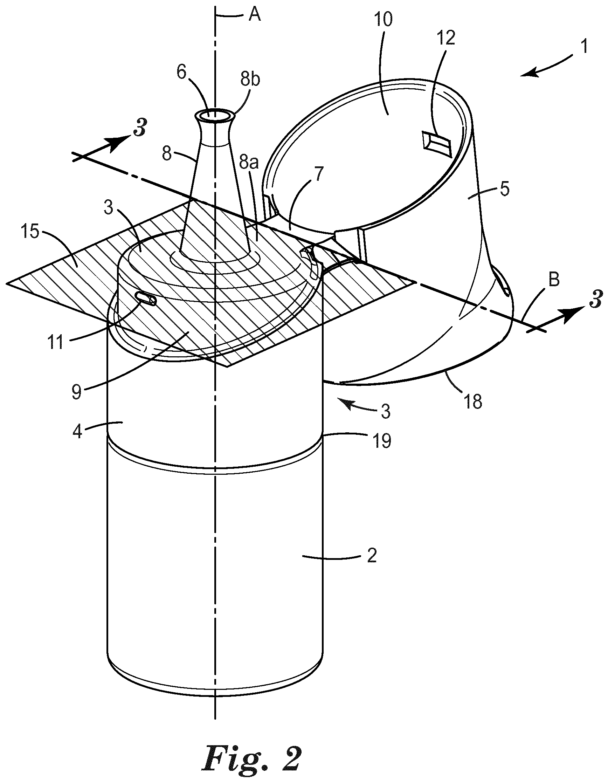

Figures 1 and 2 show a dispenser 1 for a flowable dental substance. The dispenser 1 has a bottle 2 and a flip-top cap 3. The flip-top cap 3 has a base 4 and a closure 5 that are interconnected by a living hinge 7 so that the closure 5 and the base 4 can be swiveled relative to each other between a closed position (shown in Fig. 1) and an open position (shown in Fig. 2). The closure 5, the base 4 and the living hinge 7 are injection-molded in one piece (monolithically formed). The living hinge 7 provides for the swiveling based on a deformation of a band of plastic material (and not on two parts that move relative to each other by a sliding fitting). In the example, the living hinge 7 further is a bistable hinge that urges the closure 5 and the base 4 toward either of the closed or the open position, and prevents the closure 5 and the base 4 from self-positioning in an intermediate position between the open and the closed position.

As shown in Fig. 2 a dropper nose 8 protrudes from the base 4. The dropper nose 8 protrudes from a bottom end 8a from the base 4 over a length of 14.5 mm (in the example) to a free end 8b in which a dispensing outlet 6 is provided. The dispensing outlet 6 is provided for droplet-wise dispensing of the flowable dental substance stored in the bottle 2. For dispensing the flowable substance the dispenser 1 is typically held with the dispensing outlet 6 down (and the bottle up). The bottle 2, so held in place, can be (slightly) squeezed for dispensing the substance. The outlet 6 is formed by a dropper nose 8 (which is described in further detail below).

The base 4 has a shoulder 9 for sealing with the closure 5. In particular, a side wall 10 formed by the closure 5 and the shoulder 9 are dimensioned to snugly and sealingly fit with one another in the closed position of the dispenser 1.

Further, the side wall 10 has a first retention structure 12 and the base 4 (in particular the shoulder 9) has a second retention structure 11. In the example the first retention structure 12 is a recess and the second retention structure 11 is a bulge. The first and second retention structure 11, 12 are positioned and configured such that they engage with each other in the closed position of the dispenser 1. Thus, the first and second retention structure 11, 12 retain the closure 5 and the base 4 in the closed position by means of a snap-retention. The skilled person is aware that the first retention structure may likewise be a bulge or other positive structure and the second retention structure may be a recess or other negative structure. Other retention structures are possible.

The dispenser 1 extends along a longitudinal axis A. Further, the dispenser 1 has an overall cylindrical shape (as visible in Fig. 1) except for an actuator portion 14. The actuator portion 14 is shaped to allow a user to push the closure 5 toward the open position, for example with a thumb. For pushing the closure 5 toward the open position the user may place the dispenser 1 in one hand, holding the dispenser at the bottle 2 with the fingers of that hand and using the thumb of the same hand to push the closure 5 toward the open position. Accordingly, the dispenser 1 enables a single-handed operation. The actuator portion 14 particularly forms a protrusion that protrudes in a dimension transverse to the longitudinal axis A. Further the actuator portion 14 forms an indentation 17. The indentation 17 helps positioning and retaining a user's thumb or finger at a desired position for reliably pushing the closure 5 toward the open position.

The living hinge 7 forms a pivot axis B that is arranged offset from the longitudinal axis A and oriented transverse, in particular perpendicular to the longitudinal axis A. The pivot axis B is defined within a virtual hinge-level plane 15 that is perpendicular to the longitudinal axis A. It is noted that the skilled person appreciates that the pivot axis B formed by the living hinge may in some embodiments undergo a slight parallel or generally parallel displacement during swiveling. This shall however be covered by the present invention.

The flip-top cap 3 has a first end 18 and a second end 19. In the example the hinge-level plane 15 is arranged between the first end 18 and the second end 19.

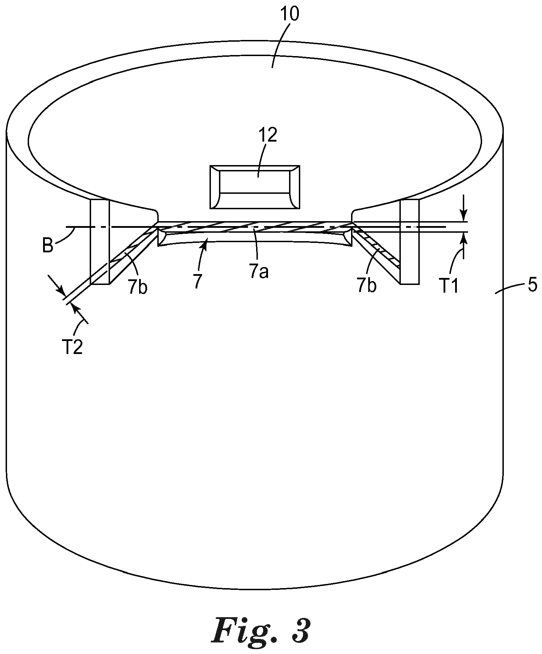

Fig. 3 shows a cross-section of the living hinge 7. The living hinge 7 has a pivot section 7a and two tension spring sections 7b. The pivot section 7a provides for a pivot about the pivot axis B. The tension spring sections 7b are directly connected with the pivot section 7a and extend in a direction laterally away (or inclined) from the pivot axis B. Therefore the tension spring sections 7b hamper the pivot function about the pivot axis B that is provided by the pivot section. However, the living hinge 7 can be pivoted between the open position and the closed position by overcoming a force that is caused by the tension spring sections 7b. Thereby the tension spring sections 7b are elastically stretched in positions between the open and the closed position and are relaxed in the open and closed position. Thus, a bistable effect is provided by the living hinge 7. The pivot section 7a has a thickness T1 and each of the tension spring sections 7b has a thickness T2. The thickness T1 of the pivot section is greater than the thickness T2 of the spring sections 7b. Due to the greater thickness of the pivot section 7a the pivot section 7a has a relatively high mechanical stiffness. Therefore the pivot section 7a provides for the pivot axis B to be determined and stable. In contrast the thinner tension spring sections 7b exhibit elastic mechanical properties and therefore do not influence (or essentially do not influence) the position and stability of the pivot axis B. Rather, the tension spring sections 7b provide for only (or predominantly) the bistability of the living hinge 7. Accordingly the pivot section 7a and the tension spring sections 7b have distinct functions that do not (or essentially not) interfere or overlap. This provides for an accurately defined and stable pivot axis in combination with a bistable function.

The living hinge 7 is maximized in durability by making it via the method of the invention. According to the method of the invention the flip-top cap is injection molded in the open position and brought into the closed position before the thermoplastic material from which it is injection molded has entirely cooled down. Thus, the living hinge is deformed before the thermoplastic material has entirely cooled down to room temperature for the first time. It was found that the so formed living hinge exhibits a maximized durability compared to the same type of a living hinge that is cooled down without deformation. In particular deforming the still warm thermoplastic material leads to a minimized stress whitening of the thermoplastic material in use (opening and closing) of the flip-top cap. This allows to make the pivot section at a maximized thickness and thus to achieve a definite and stable pivot axis.

Further, it has been found that, applying the method of the invention, the tension spring sections of the living hinge shrink to their final condition only after bringing the flip-top cap in the closed position. Therefore the bistable effect of the living hinge is maximized with respect to the same type of a living hinge that has not undergone any deformation before the thermoplastic material has cooled down.

## Claims

1. A method of monolithically forming a flip-top cap from a thermoplastic material, the flip-top cap comprising a base from which a dropper nose protrudes and a closure, the base and the closure being hingedly connected to each other by a living hinge for pivoting between a closed position, in which the closure closes the dropper nose, and an open position, in which the dropper nose is uncovered from the closure, wherein the method comprises the steps of:
- injection molding the flip-top cap in the open position in an injection molding device; and
- positioning the closure and the base toward the closed position prior to ejecting the flip-top cap from the injection molding device.

2. The method of claim 1, wherein the step of positioning the closure and the base into the closed position is performed at a stage at which the thermoplastic material has solidified after injection molding of the flip-top cap but has not yet cooled down to room temperature of 23 °C (degrees Celsius).

3. The method of claim 1 or 2, wherein the step of positioning the closure and the base into the closed position is performed within a time of up to 10 seconds after injection molding the flip-top cap in the open position.

4. The method claim 3, wherein the step of positioning the closure and the base into the closed position is performed at a time of about 5 seconds after injection molding the flip-top cap in the open position.

5. A flip-top cap for dispensing a flowable dental substance, the flip-top cap being monolithically formed of a thermoplastic material, and comprising a base from which a dropper nose protrudes and a closure, the base and the closure being hingedly connected to each other by a living hinge for pivoting between a closed position, in which the closure closes the dropper nose, and an open position, in which the dropper nose is uncovered from the closure, wherein the living hinge has a pivot section that forms a pivot about a pivot axis, and a pair of tension spring sections directly connected to the pivot section on opposite ends of the pivot section, a length dimension being defined along a path of the living hinge between the base and the closure, a width dimension being defined along the pivot axis and a thickness being defined in a dimension perpendicular to the width dimension and perpendicular to the length dimension, wherein the smallest thickness of the pivot section is greater than the smallest thickness of each of the tension spring sections.

6. The flip-top cap of claim 5, wherein the tension spring sections protrude from the pivot section and from opposite free ends of the living hinge, and in the length dimension connecting the base and the closure.

7. The flip-top cap of claim 6, wherein the free ends extend at a distance radially offset relative to the pivot axis.

8. The flip-top cap of any of the claims 5 to 7, wherein the living hinge and the pivot section each have a width in the width dimension, wherein the width of the pivot section is greater than one half of the width of the living hinge.

9. The flip-top cap of claim 8, wherein the width of the pivot section is about 0.6 of the width of the living hinge.

10. The flip-top cap of any of the claims 5 to 9, wherein the base and the closure between the open position and the closed position are movable by 180 degrees relative to each other.

11. The flip-top cap of any of the claims 6 to 10, wherein the living hinge provides for a bistable positioning of the base and the closure relative to each other toward either the open position or the closed position.

12. The flip-top cap of any of the claims 5 to 11, connected with a container bottle containing the flowable dental substance.
